# EUROPÄISCHE PATENTSCHRIFT

(11) **EP 1 448 648 B1**
(45) Veröffentlichungstag und Bekanntmachung des Hinweises auf die Patenterteilung: **02.03.2005**
(21) Anmeldenummer: 03720423.7
(22) Anmeldetag: 04.04.2003
(51) Int. Cl.: C08G 2/00

(54) **POLYSILOXAN UND TEXTILHILFSMITTEL ENTHALTEND EIN POLYSILOXAN**
POLYSILOXANE AND TEXTILE ADJUNCT COMPRISING A POLYSILOXANE
POLYSILOXANE ET ADJUVANT TEXTILE CONTENANT UN POLYSILOXANE

(30) Priorität: 04.04.2002 DE 10214982
(43) Veröffentlichungstag der Anmeldung: 25.08.2004
(73) Patentinhaber: CHT R. BEITLICH GmbH, 72072 Tübingen (DE)
(72) Erfinder: WILL, Peter, 72810 Gomaringen (DE); KOCH, Matthias, 70794 Filderstadt (DE); NICKEL, Friedhelm, 72072 Tübingen (DE)
(74) Vertreter: Winter, Martina Dr.
(86) Internationale Anmeldenummer: PCT/EP2003/003534
(87) Internationale Veröffentlichungsnummer: WO 2003/085015

(56) Entgegenhaltungen:
- EP-A- 1 000 959
- EP-A- 1 116 813
- DE-A- 10 036 678

## Beschreibung

Die vorliegende Erfindung betrifft ein Polysiloxan sowie ein Textilhilfsmittel mit einem Polysiloxan.

In der EP 1 000 959 A2 werden polyetherquatfunktionelle Polysiloxane beschrieben, welche in Zubereitungen zur Verbesserung der Oberflächeneigenschaften von Geweben und Fasern eingesetzt werden. Bei dieser Stoffklasse handelt es sich um Polysiloxane, bei denen die Si-Atome mindestens einen Polyetherrest und mindestens einen Rest mit einem quartären Stickstoffatom tragen, wobei das Gegenion ein Anion einer anorganischen oder organischen Säure ist. Derartige Verbindungen eignen sich als Textilhilfsmittel für Substrate aus bspw. Baumwolle, Polyester oder auch Leder, welche dem Material einen guten Weichgriff und eine geringere Vergilbungsneigung verleihen. Besonders erwünscht, aber in nicht befriedigendem Maße realisiert sind hierbei eine gute Permanenz, d.h. Verweildauer auf der Faser und eine gute Handhabbarkeit, d.h. eine nicht zu hohe Viskosität.

Aus der DE 40 23 247 C1 sind mit Oxyalkylengruppen modifizierte Epoxypolysiloxane bekannt, welche am Si-O-Rückgrat bspw. kurz- oder langkettige Alkylreste, mindestens einen über Si-C-Bindungen mit Si-Atomen des Polysiloxans verknüpften Epoxyrest und mindestens einen Oxyalkylenrest aufweisen. Diese härtbaren Epoxypolysiloxane werden als durch Photoinitiatoren härtbare Beschichtungsmittel verwendet.

Die Aufgabe der vorliegenden Erfindung besteht darin, neue Substanzen bereitzustellen, die als Textilhilfsmittel zur Ausrüstung von Fasern und Geweben geeignet sind und eine verbesserte Permanenz und eine bessere Handhabbarkeit aufweisen.

Die Lösung besteht in einer Verbindung mit den Merkmalen des Anspruchs 1. Erfindungsgemäß ist also vorgesehen, dass die Polysiloxane neben mindestens einem quartären Stickstoffatom noch mindestens einen Epoxyrest aufweisen. Mit dem Epoxyrest kann die Substanz auf der Faser quervernetzt werden. Damit erhält man eine verbesserte Permanenz, d.h. die Substanz kann von der Faser nicht mehr abgewaschen werden. Ferner hat sich überraschend gezeigt, dass die so ausgerüsteten Materialien einen sehr guten Weichgriff und eine besonders angenehme Tragephysiologie aufweisen. Die erfindungsgemäßen Substanzen sind für alle Natur- und Kunstfasern geeignet, die mit Epoxiden reagieren können, die also bspw. OH-Reste bzw. NH-Reste aufweisen. Die Seitenketten der Reste R₂ und R₃ sorgen für eine gewisse sterische Hinderung, die bewirkt, dass die Viskosität der erfindungsgemäßen Verbindungen herabgesetzt wird, so dass die Handhabung verbessert wird.

Ein weiterer Gegenstand der vorliegenden Patentanmeldung betrifft ein Textilhilfsmittel enthaltend mindestens ein erfindungsgemäßes Polysiloxan. Da diese Substanz von der Faser nicht mehr abgewaschen werden kann, weist das Textilhilfsmittel eine besonders ausgeprägte Permanenz auf. Ferner hat sich überraschend gezeigt, dass die so ausgerüsteten Materialien einen sehr guten Weichgriff und eine besonders angenehme Tragephysiologie aufweisen.

Schließlich ist auch eine Faser oder ein Gewebe, welches mit einem solchen Textilhilfsmittel ausge rüstet oder behandelt ist, Gegenstand der vorliegenden Erfindung.

Vorteilhafte Weiterbildungen ergeben sich aus den Unteransprüchen. Insbesondere kann der Anteil an Alkylresten mit 2 bis 30 C-Atomen gemessen an der Gesamtzahl der Reste größer als 10 Mol sein.

Die erfindungsgemäßen Polysiloxane werden vorzugsweise in Form wässriger Emulsionen eingesetzt. Ein geeignetes Verfahren zur Herstellung von feinteiligen Polydiorganosiloxanemulsionen ist bspw. bekannt aus U.S.-A-5,302,657. Dort wird die Emulsion mit einem in Polydiorganosiloxan löslichen Emulgator in zwei Schritten hergestellt, wobei im ersten Schritt ein Konzentrat erhalten wird, welches im zweiten Schritt mit Wasser verdünnt wird. Als Emulgatoren können beliebige für die Herstellung von organofunktionellen Polysiloxanemulsionen verwendbare Emulgatoren eingesetzt werden.

Als nichtionische Emulgatoren eignen sich besonders Alkylpolyglycolether, vorzugsweise solche mit 4 bis 40 Ethylenoxid-Einheiten und/oder Alkylresten von 8 bis 20 C-Atomen; Alkylarylpolyglycolether, vorzugsweise solche mit 4 bis 40 Ethylenoxid-Einheiten und/oder 8 bis 20 C-Atomen in den Alkylresten; Ethylenoxid/Propylenoxid-Blockcopolymere, vorzugsweise solche mit 4 bis 40 Ethylenoxid- und/oder Propylenoxid-Einheiten; gesättigte und ungesättigte Fettsäuren mit 6 bis 24 C-Atomen; Naturstoffe und deren Derivate wie Lecithin, Lanolin, Saponine, Cellulose; Cellulosealkylether und Carbooxyalkylcellulosen, deren Alkylgruppen jeweils bis zu 4 C-Atome besitzen; polare Gruppen, insbesondere Polyethergruppen enthaltende lineare Polydiorganosiloxane; gesättigte und ungesättigte alkoxylierte Fettamine mit 8 bis 24 C-Atomen.

Geeignete kationische Emulgatoren sind bspw. Salze von primären, sekundären und tertiären Fettaminen mit 8 bis 24 C-Atomen, insbesondere mit Essigsäure, Salzsäure und Phosphorsäuren; quartäre Alkylbenzolammoniumsalze, insbesondere solche, deren Alkylgruppe, 6 bis 24 C-Atome besitzt, insbesondere die Halogenide, Sulfate, Phosphate und Acetate; Alkylpyridinium-, Alkylimidazoliumund Alkyoxazoliniumsalze, insbesondere solche, deren Alkylkette bis zu 18 C-Atomen besitzt, speziell die Halogenide, Sulfate, Phosphate und Acetate.

Weitere geeignete Emulgatoren können aus der Gruppe bestehend aus Fettsäurepolyglycolestern, polyethoxylierten Fettsäureglyceriden und Sorbitanestern, Alkylpolyglycosiden, Fettsäurealkylolamiden, Alkylethercarbonsäuren, Alkarylehtercarbonsäuren, ethoxilierten quartären Ammoniumsalzen, Aminoxiden, Betainen, Sulfobetainen und Sulfosuccinaten ausgewählt werden.

Die wässrige Emulsion kann als weitere Komponente eine oder mehrere anorganische und/oder organische Säuren und/oder Anhydride enthalten. Geeignet sind bspw. Salzsäure, Schwefelsäure und Phosphorsäure, aber auch Ameisensäure, Essigsäure, Glycolsäure, Aldonsäuren wie bspw. Gluconsäure, Ascorbinsäure oder Uronsäuren wie bspw. Glucuronsäure. Als mehrbasige Säure können z. Bsp. eingesetzt werden Oxalsäure, Zitronensäure oder Aldarsäuren wie Glucar- oder Schleimsäure. Als Beispiel für ein Anhydrid einer organischen Säure ist Essigsäureanhydrid zu nennen.

Die wässrige Emulsion kann ferner als weitere Komponente ein Hydrotropikum enthalten, welches bspw. aus der Gruppe der polyfunktionellen Alkohole ausgewählt werden kann. So können Dialkohole mit 2 bis 10, bevorzugt 2 bis 6, insbesondere jedoch 2 bis 4 Kohlenstoffatomen pro Molekül eingesetzt werden. Gut geeignet sind auch deren Mono- und Diether sowie die Mono- und Diester dieser Dialkohole. Besonders bevorzugt zu verwendende Substanzen sind bspw. 1,2-Propylenglycol, Dipropylenglycol und Butyldiglycol.
Die Zubereitungen der erfindungsgemäßen Polysiloxane können zur Erzielung weiterer textiltechnischer Effekte auch mit herkömmlichen Ausrüstungsmitteln kombiniert werden. Geeignete Komponenten sind hierbei Polyethylenverbindungen, Fettsäurekondensationsprodukte, sowie andere Organosiloxane.

Eine bevorzugte Zusammensetzung enthält 2 bis 80 Gew.-% mindestens eines erfindungsgemäßen Polysiloxans, 0 bis 40 Gew.-% mindestens eines Emulgators, 0 bis 5 Gew.-% mindestens einer anorganischen und/oder organischen Säure und/oder eines Säureanhydrids, 0 bis 40 Gew.-% mindestens eines üblichen Ausrüstungsmittels, 0 bis 20 Gew.-% mindestens eines Hydrotopikums, sowie 0 bis 98 Gew.-% Wasser.

Ausführungsbeispiele der vorliegenden Erfindung werden im Folgenden näher beschrieben.

### I. Herstellung der erfindungsgemäßen Polysiloxane

Die Ausführungsbeispiele der erfindungsgemäßen Polysiloxane werden im Folgenden als Quat bezeichnet, wobei die drei vorangestellten Zahlen jeweils die Kettenlänge, die Anzahl an SiOMe₂-Einheiten, die Anzahl von SiOMeH-Einheiten und die Anzahl der endständigen Reste, ausgehend von SiOM₂H, bezeichnen. Zur Chemie der Polysiloxane, insbesondere zur Hydrosylilierung, wird verwiesen auf Walter Noll, Chemie und Technologie der Silicone, Verlag Chemie Weinheim, 2. neubearbeitete Auflage 1968, ISBN: 0125207506 sowie auf Bogdan Marciniec (Hrsg.), Comprehensive Handbook of Hydrosylilation, pp.11-18, Pergamon Press 1992. Zur Quaternierung wird verwiesen auf EP 1 000 959.

### 1. 30/2/2 Quat

### a) Synthese einer Vorstufe mit 4 Mol Allylglycidether (AGE)

In einem 500 ml-Vierhalskolben, versehen mit Rührer, Tropftrichter, Thermometer und Rückflusskühler, werden unter Stickstoff 21,91g (0,192 Mol) AGE vorgelegt und bei 60°C mit 0,1g einer Platinverbindung versetzt. Anschließend werden 89,38g (0,048 Mol) Wasserstoffsiloxan zugetropft und auf 100°C erwärmt. Die Reaktion läuft solange bis der Wasserstoff vollständig abreagiert ist. Es wird so ein klares, hellgelbes, niederviskoses Öl erhalten.

### Synthese der Quatverbindung

In einem 500 ml-Vierhalskolben, versehen mit Rührer, Tropftrichter, Thermometer und Rückflusskühler, werden 100g Vorstufe vorgelegt. Bei 80°C wird eine Mischung aus 3,66g (0,06 Mol) Essigsäure und 16,5g (0,06 Mol) C 16-Amin innerhalb von etwa 30 minzugetropft. Die Nachreaktionszeit beträgt 2 bis 6 Stunden. Man erhält ein klares, hellgelbes Öl mit einer Viskosität von 400 mPa×s.

### b) Synthese einer Vorstufe mit 3 Mol Allylglycidether (AGE) und 1 Mol Hexadecen

In einem 500 ml-Vierhalskolben, versehen mit Rührer, Tropftrichter, Thermometer und Rückflusskühler, werden unter Stickstoff 16,44g (0,144 Mol) AGE und 10,8g (0,048 Mol) Hexadecen vorgelegt und bei 60°C mit 0,1 g einer Platinverbindung versetzt. Anschließend werden 89,38g (0,048 Mol) Wasserstoffsiloxan zugetropft und auf 100°C erwärmt. Die Reaktion läuft solange bis der Wasserstoff vollständig abreagiert ist. Es wird so ein klares, hellgelbes, niederviskoses Öl erhalten.

### Synthese der Quatverbindung

In einem 500 ml-Vierhalskolben, versehen mit Rührer, Tropftrichter, Thermometer und Rückflusskühler, werden 100g Vorstufe vorgelegt. Bei 80°C wird eine Mischung aus 5,7g (0,09 Mol) Essigsäure und 17,0g (0,06 Mol) C 16-Amin zugetropft. 2 bis 6 h Nachreaktionszeit. Das Produkt ist ein klares, gelbes Öl mit einer Viskosität von 500 mPa×s.

### 2. 60/2/2 Quat

### a) Synthese einer Vorstufe mit 4 Mol AGE

In einem 500 ml-Vierhalskolben, versehen mit Rührer, Tropftrichter, Thermometer und Rückflusskühler, werden unter Stickstoff 21.91g (0,192 Mol) AGE vorgelegt und bei 60°C mit 0.1g einer Platinverbindung versetzt. Anschließend werden 225,56g (0,048 Mol) Wasserstoffsiloxan zugetropft und auf 100°C erwärmt. Die Reaktion läuft solange bis der Wasserstoff vollständig abreagiert ist. Es wird so ein klares, hellgelbes, niederviskoses Öl erhalten.

### Synthese der Quatverbindung

In einem 500 ml-Vierhalskolben, versehen mit Rührer, Tropftrichter, Thermometer und Rückflusskühler, werden 100g Vorstufe vorgelegt Bei 80°C wird eine Mischung aus 2,4g (0,04 Mol) Essigsäure und 10,26g (0,04 Mol) C 16-Amin innerhalb von etwa 30 min zugetropft. Die Nachreaktionszeit beträgt 2 bis 6 Stunden. Das Produkt ist ein klares, hellgelbes Öl mit einer Viskosität von 500 mPa×s.

### 3. 80/2/2 Quat

### a) Synthese einer Vorstufe mit 4 Mol AGE

In einem 500 ml-Vierhalskolben, versehen mit Rührer, Tropftrichter, Thermometer und Rückflusskühler, werden unter Stickstoff 21,91g (0,192 Mol) AGE vorgelegt und bei 60°C mit 0,1g einer Platinverbindung versetzt Anschließend werden 296,6g (0,048 Mol) Wasserstoffsiloxan zugetropft und auf 100°C erwärmt. Die Reaktion läuft solange, bis der Wasserstoff vollständig abreagiert ist. Es wird so ein klares, hellgelbes, niederviskoses Öl erhalten.

### Synthese der Quatverbindung

In einem 500 ml-Vierhalskolben, versehen mit Rührer, Tropftrichter, Thermometer und Rückflusskühler, werden 100g Vorstufe vorgelegt. Bei 80°C wird eine Mischung aus 1,51g (0,025 Mol) Essigsäure und 5,4g (0,025 Mol) C 12-Amin innerhalb von etwa 30 min zugetropft. Die Nachreaktionszeit beträgt 2 bis 6 Stunden. Es wird ein klares, hellgelbes Öl mit einer Viskosität von 1.600 mPa×s erhalten.

### Synthese der Quatverbindung

In einer anderen Variante werden in einem 500 ml-Vierhalskolben, versehen mit Rührer, Tropftrichter, Thermometer und Rückflusskühler, 100g Vorstufe vorgelegt. Bei 80°C wird eine Mischung aus 1,51g (0,025 Mol) Essigsäure und 6,82g (0,025 Mol) C 16-Amin innerhalb von etwa 30 min zugetropft. Die Nachreaktionszeit beträgt 2 bis 6 Stunden. Das Produkt ist ein klares, gelbes Öl mit einer Viskosität von 2.000 mPa×s.

### b) Synthese einer Vorstufe mit 3 Mol AGE und 1 Mol Hexadecen

In einem 500 ml-Vierhalskolben, versehen mit Rührer, Tropftrichter, Thermometer und Rückflusskühler, werden unter Stickstoff 16,44g (0, 144Mol) AGE und 10,8g (0,048 Mol) Hexadecen vorgelegt und bei 60°C mit 0,1g einer Platinverbindung versetzt. Anschließend werden 296,6g (0,048 Mol) Wasserstoffsiloxan zugetropft und auf 100°C erwärmt. Die Reaktion läuft solange bis der Wasserstoff vollständig abreagiert ist. Es wird so ein klares, hellgelbes, niederviskoses Öl erhalten.

### Synthese der Quatverbindung

In einem 500 ml-Vierhalskolben, versehen mit Rührer, Tropftrichter, Thermometer und Rückflusskühler, werden 100g Vorstufe vorgelegt Bei 80°C wird eine Mischung aus 1,23g (0,025 Mol) Essigsäure und 5,56g (0,025 Mol) C 16-Amin innerhalb von etwa 30 min zugetropft. Die Nachreaktionszeit beträgt 2 bis 6 Stunden. Das Produkt ist ein klares, gelbes Öl mit einer Viskosität von 1.300 mPa×s.

### c) Synthese einer Vorstufe mit 3 Mol AGE und 1 Mol Allylpolyether

In einem 500 ml-Vierhalskolben, versehen mit Rührer, Tropftrichter, Thermometer und Rückflusskühler, werden unter Stickstoff 4,12g (0,036 Mol) AGE und 90g (0,012 Moi) Alkylpolyether vorgelegt und bei 60°C mit 0,1g einer Platinverbindung versetzt Anschließend werden 296,6g (0,048 Mol) Wasserstoffsiloxan zugetropft und auf 100°C erwärmt. Die Reaktion läuft solange, bis der Wasserstoff vollständig abreagiert ist. Es wird so ein klares, hellgelbes, niederviskoses Öl erhalten.

### Synthese der Quatverbindung

In einem 500 ml-Vierhalskolben, versehen mit Rührer, Tropftrichter, Thermometer und Rückflusskühler, werden 100g Vorstufe vorgelegt Bei 80°C wird eine Mischung aus 2,3g (0,04 Mol) Essigsäure und 8,27g (0,04 Mol) C 12-Amin zugetropft. Die Nachreaktionszeit beträgt 2 bis 6 Stunden. Das Produkt ist ein klares, gelbes Öl mit einer Viskosität von 2.000 mPa×s.

### 4. 80/0/2 Quat (Vergleichsbeispiel)

### Synthese einer Vorstufe

In einem 500 ml-Vierhalskolben, versehen mit Rührer, Tropftrichter, Thermometer und Rückflusskühler, werden unter Stickstoff 3,76g (0,033 Mol) AGE vorgelegt und bei 60°C mit 0,1g einer Platinverbindung versetzt. Anschließend werden 100,0g (0,0165 Mol) Wasserstoffsiloxan zugetropft und auf 100°C erwärmt. Die Reaktion läuft solange, bis der Wasserstoff vollständig abreagiert ist. Es wird so ein klares, hellgelbes, niederviskoses Öl erhalten.

### Synthese der Quatverbindung

In einem 500 ml-Vierhalskolben, versehen mit Rührer, Tropftrichter, Thermometer und Rückflusskühler, werden 100g Vorstufe vorgelegt. Bei 80°C wird eine Mischung aus 1,51g (0,025 Mol) Essigsäure und 6,82g (0,025 Mol) C 16-Amin innerhalb von etwa 30 min zugetropft. Die Nachreaktionszeit beträgt 2 bis 6 Stunden. Das Produkt ist ein klares, gelbes Öl mit einer Viskosität von 12.000 mPa×s.

### II. Herstellung erfindungsgemäßer Textilhilfsmittel

### Beispiele A bis F

33 g eines Polysiloxans aus den Beispielen I 1-I 4 werden mit 3,5 g Isotridecanolethoxylat mit 8 EO, 1,5 g eines quartären Kokosalkylaminethoxylates, 4 g Butyldiglycol und 0,2 g Essigsäure (60%) gemischt, anschließend wird unter Rühren 57,8 g Wasser zugegeben. Man erhält transparente bis milchig trübe Emulsionen.

In Tabelle 1 sind die in den einzelnen Beispielen verwendeten Polysiloxane nochmals zusammen gefasst.

**Tabelle 1**

| Beispiel | Polysiloxan |
|---|---|
| A | I 1b |
| B | I 2a |
| C | I 3a |
| D | I 3b |
| E | I 3c |
| F | I 4 (Vergleichsbeispiel) |

### III. Anwendungstechnische Beurteilung

### a) Applikationsbeispiele

Zur Überprüfung des Weichgriffes sowie der Hydrophilie der erfindungsgemäßen Emulsionen wurden native Fasern mit dem folgenden Foulardverfahren ausgerüstet:

Ein Baumwollgewebe (125 g/m²) wurde mit einer Flotte, die 20 g/l der entsprechenden Emulsion enthält, foulardiert, auf 70% Flottenaufnahme abgequetscht und anschließend bei 120 °C drei Minuten getrocknet.

### b) Testmethoden

Das ausgerüstete Gewebe wurde wie unten unter 1. und 2. beschrieben einer Griffbeurteilung und einem Hydrophilietest unterzogen. Anschließend wurden die Gewebe wie unter 3. beschreiben drei Waschvorgängen unterzogen und die Test nach dem ersten und dritten Waschvorgang wiederholt. Die Ergebnisse sind in den Tabellen 2 und 3 zusammen gefasst.

### 1. Griffbeurteilung

Zur Griffbeurteilung wurde ein erfahrenes Team zusammengestellt, das die anonymisierten Griffmuster der mit den Emulsionen A bis F ausgerüsteten Gewebe, mit Hilfe des Handtests bewertet. Als Vergleichsprobe wurde jeweils ein unbehandeltes Gewebe den Testreihen zugegeben. Es resultiert ein sehr weicher, angenehmer, seidiger und eleganter Griff des ausgerüsteten textilen Substrats.

### 2. Prüfung der Hydrophilie

Zur Überprüfung der Hydrophilie wird der TEGEWA-Tropfentest angewandt (vgl. Melliand 68, 1987; 581 - 583). Zur Durchführung des Testes wird das ausgerüstete Gewebe auf einer geeigneten Spannvorrichtung horizontal so aufgespannt, dass es mit der Unterlage nicht in Berührung kommt. Aus einer Fallhöhe von 40 mm wird ein Wassertropfen von 0,050 ml +/- 10% auf das Gewebe getropft. Sobald der Tropfen auf das Prüfmaterial trifft, wird mit der Zeitmessung begonnen. Die Zeitmessung wird abgestoppt, wenn der Tropfen vollständig in das Gewebe eingedrungen und der Glanz verschwunden ist.

### 3. Waschvorgang

Die Waschvorgänge wurden in einer handelsüblichen Waschmaschine, Zanker Classic 8082, mit dem Waschgang für Buntwäsche bei 40° C mit einem handelsüblichen Vollwaschmittel, Persil phosphatfrei, durchgeführt. Zusätzlich wurde die Maschine mit einem Kilogramm Polyestergewebe als Füllmaterial bestückt. Anschließend wurden die Probanden bei Raumtemperatur über Nacht getrocknet.

**Tabelle 2**

| Beurteilung des Weichgriffs der Textilhilfsmittel aus den unter II. genannten Beispielen A bis F | | | | | | | |
|---|---|---|---|---|---|---|---|
| Weichgriff | A | B | C | D | E | F | Unbehandelt |
| Vor der Wäsche | ++ | +++ | +++ | +++ | ++ | ++ | - |
| Nach der 1. Wäsche | ++ | +++ | +++ | +++ | ++ | +/- | - |
| Nach der 3. Wäsche | + | + | ++ | ++ | + | - | - |

**Tabelle 3**

| Beurteilung der Hydrophilie der Textilhilfsmittel aus den unter II. genannten Beispielen A bis F; angegeben ist die Einsinkzeit in Sekunden. | | | | | | | |
|---|---|---|---|---|---|---|---|
| Hydrophilie | A | B | C | D | E | F | Unbehandelt |
| Vor der Wäsche | 36 | 45 | 62 | 73 | 21 | 69 | 19 |
| Nach der 1. Wäsche | 19 | 23 | 48 | 52 | 12 | 13 | 7 |
| Nach der 3. Wäsche | 8 | 11 | 35 | 23 | 8 | 5 | 5 |

## Patentansprüche

1. Polysiloxan der allgemeinen Formel (I) 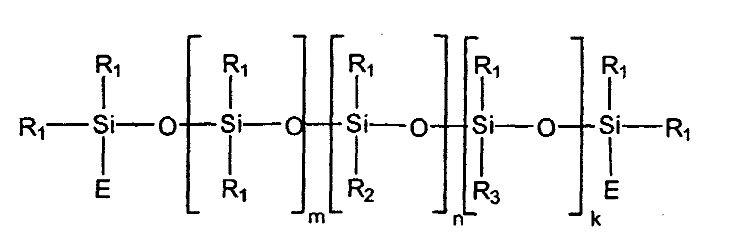 wobei m eine ganze Zahl von 5 - 200 ist,
n eine ganze Zahl von 0 - 25 ist,
k eine ganze Zahl von 1 - 25 ist,
R₁ einen aliphatischen C₁- bis C₃- Rest oder einen Phenylrest bedeutet,
R₂ einen aliphatischen C₉- bis C₃₀ - Rest und/oder einen Polyetherrest der allgemeinen Formel (CH₂)₃O(C₂H₄O)ₓ(C₃H₆O)_{y}Q bedeutet, wobei x und y gleich oder verschieden sein können und eine ganze Zahl zwischen 0 und 50 bedeuten und Q Wasserstoff oder einen Alkylrest mit 1 bis 4 C-Atomen bedeutet,
R₃ einen epoxidischen Rest oder einen Rest MZ bedeutet,
E einen Rest MZ, R₃ oder R₂ bedeutet,
wobei pro Molekül mindestens ein epoxidischer Rest und ein Rest MZ enthalten sind,
wobei der epoxidische Rest ausgewählt ist aus der Gruppe umfassend 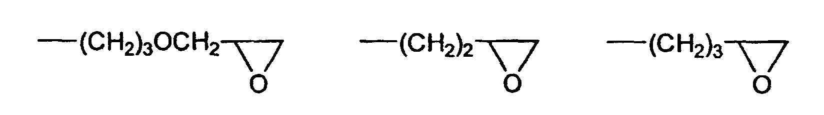 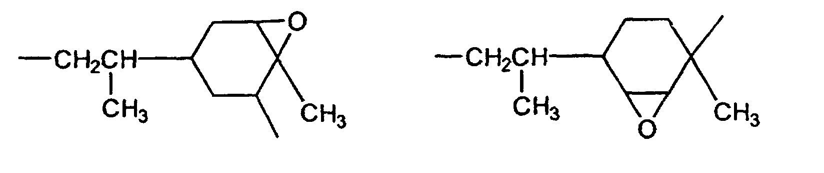 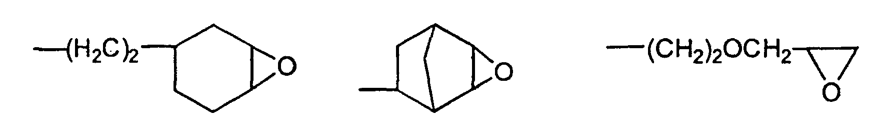 wobei M ausgewählt ist aus der Gruppe umfassend 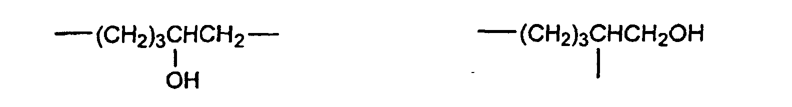 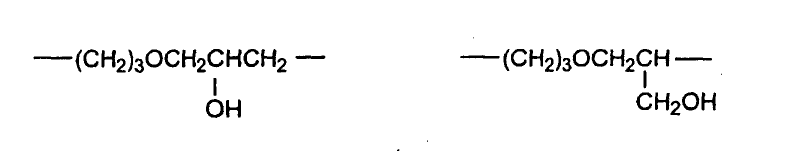 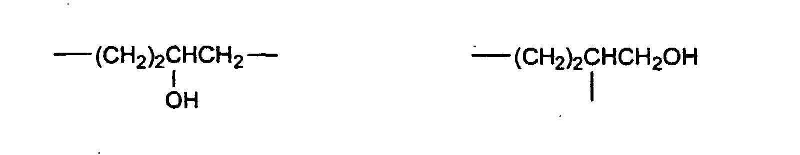 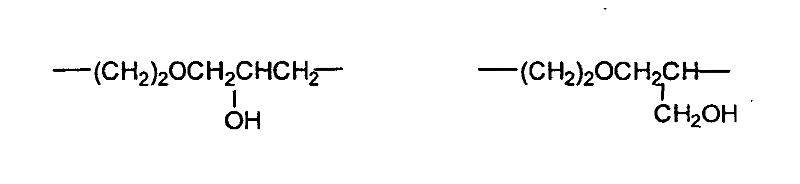 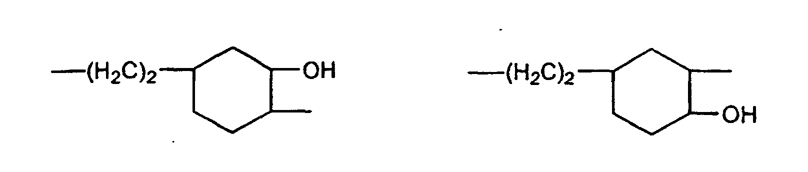 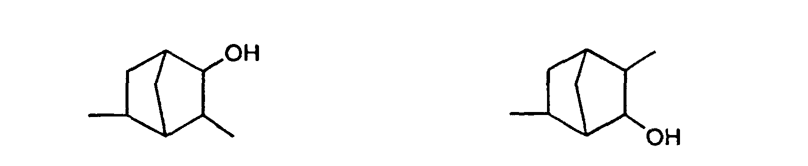 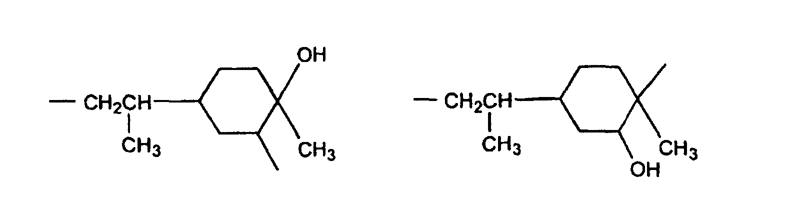 wobei Z ausgewählt ist aus der Gruppe umfassend 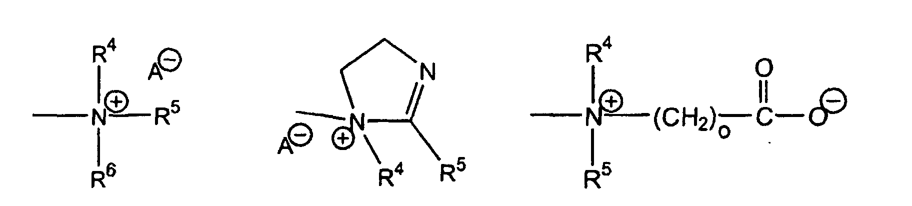 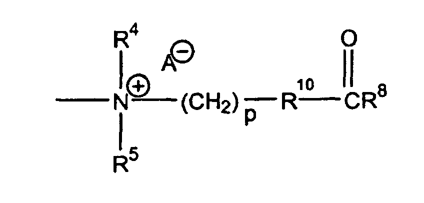 wobei das quartäre N-Atom des Restes Z mit dem Rest M über das zur C-OH-Gruppe im Rest M benachbarte Kohlenstoffatom verbunden ist,
wobei R⁴, R⁵, R⁶, gleich oder verschieden sein können und H, C₁- bis C₂₂- Alkyl, C₁- bis C₂₂- Alkenyl, bedeuten können, wobei die Alkyl- oder Alkylenreste Hydroxylgruppen aufweisen können,
wobei R⁸, R⁹ gleich oder verschieden sein können und dieselbe Bedeutung wie R⁴, R⁵, R⁶ haben oder Fluor-, Chlor- oder Brom-substituierte C₁- bis C₁₀- Alkylreste sind,
wobei R¹⁰ ein -0- oder ein NR¹¹-Rest mit R¹¹ = H, C₁- bis C₄- Alkyl oder C₁- bis C₄-Hydroxyalkyl bedeutet,
wobei o eine ganze Zahl von1 bis 4 ist,
wobei A^{⊖} ein anorganisches oder organisches Anion ist, das von einer üblichen physiologisch verträglichen Säure HX herrührt.

2. Polysiloxan nach Anspruch 1, **dadurch gekennzeichnet, dass** der Anteil an C₂- bis C₃₀- Alkylresten gemessen an der Gesamtzahl der Reste größer als 10 Mol-% ist.

3. Polysiloxan nach einem der vorhergehenden Ansprüche, **dadurch gekennzeichnet, dass** R₂ einen aliphatischen C₁₀- bis C₂₀ - Rest bedeutet.

4. Polysiloxan nach einem der vorhergehenden Ansprüche, **dadurch gekennzeichnet, dass** der Polyetherrest der allgemeinen Formel (CH₂)₃O(C₂H₄O)ₓ(C₃H₆O)_{y}Q bedeutet, wobei x und y gleich oder verschieden sein können und x eine ganze Zahl zwischen 8 und 15 bedeutet und y eine ganze Zahl zwischen 0 und 25 bedeutet und Q Wasserstoff oder einen Alkylrest mit 1 bis 4 C-Atomen bedeutet.

5. Textilhilfsmittel, **dadurch gekennzeichnet, dass** es mindestens ein Polysiloxan nach einem der Ansprüche 1 bis 4 enthält.

6. Textilhilfsmittel nach Anspruch 5, **dadurch gekennzeichnet, dass** es in Form einer wässrigen Emulsion vorliegt.

7. Textilhilfsmittel nach Anspruch 6, **dadurch gekennzeichnet, dass** es mindestens einen nichtionischen und/oder kationischen Emulgator enthält.

8. Textilhilfsmittel nach Anspruch 7, **dadurch gekennzeichnet, dass** der nichtionische Emulgator ausgewählt ist aus der Gruppe bestehend aus Alkylpolyglycolether, vorzugsweise solche mit 4 bis 40 Ethylenoxid-Einheiten und/oder Alkylresten von 8 bis 20 C-Atomen; Alkylarylpolyglycolether, vorzugsweise solche mit 4 bis 40 Ethylenoxid-Einheiten und/oder 8 bis 20 C-Atomen in den Alkylresten; Ethylenoxid/Propylenoxid-Blockcopolymere, vorzugsweise solche mit 4 bis 40 Ethylenoxid- und/oder Propylenoxid-Einheiten; gesättigte und ungesättigte Fettsäuren mit 6 bis 24 C-Atomen; Naturstoffe und deren Derivate wie Lecithin, Lanolin, Saponine, Cellulose; Cellulosealkylether und Carbooxyalkylcellulosen, deren Alkylgruppen jeweils bis zu 4 C-Atome besitzen; polare Gruppen, insbesondere Polyethergruppen enthaltende lineare Polydiorganosiloxane; gesättigte und ungesättigte alkoxylierte Fettamine mit 8 bis 24 C-Atomen.

9. Textilhilfsmittel nach Anspruch 7, **dadurch gekennzeichnet, dass** der kationische Emulgator ausgewählt ist aus der Gruppe bestehend aus Salze von primären, sekundären und tertiären Fettaminen mit 8 bis 24 C-Atomen, insbesondere mit Essigsäure, Salzsäure und Phosphorsäuren; quartäre Alkylbenzolammoniumsalze, insbesondere solche, deren Alkylgruppe 6 bis 24 C-Atome besitzt, insbesondere die Halogenide, Sulfate, Phosphate und Acetate; Alkylpyridinium-, Alkylimidazolium- und Alkyoxazoliniumsalze, insbesondere solche, deren Alkylkette bis zu 18 C-Atomen besitzt, speziell die Halogenide, Sulfate, Phosphate und Acetate.

10. Textilhilfsmittel nach einem der Ansprüche 5 bis 9, **dadurch gekennzeichnet, dass** es eine oder mehrere anorganische und/oder organische Säuren und/oder Anhydride enthält.

11. Textilhilfsmittel nach Anspruch 10, **dadurch gekennzeichnet, dass** die Säuren bzw. Anhydride ausgewählt sind aus der Gruppe bestehend aus Salzsäure, Schwefelsäure und Phosphorsäure, Ameisensäure, Essigsäure, Glycolsäure, Aldonsäuren wie bspw. Gluconsäure, Ascorbinsäure, Uronsäuren wie bspw. Glucuronsäure, Oxalsäure, Zitronensäure, Aldarsäuren wie Glucar- oder Schleimsäure sowie Essigsäureanhydrid.

12. Textilhilfsmittel nach einem der Ansprüche 5 bis 11, **dadurch gekennzeichnet, dass** es mindestens ein Hydrotropikum enthält.

13. Textilhilfsmittel nach Anspruch 12, **dadurch gekennzeichnet, dass** das Hydrotopikum ausgewählt ist aus der Gruppe der polyfunktionellen Alkohole, insbesondere Dialkohole mit 2 bis 10, bevorzugt 2 bis 6, besonders bevorzugt 2 bis 4 Kohlenstoffatomen pro Molekül, deren Mono- und Diether sowie deren Mono- und Diester, vorzugsweise 1,2-Propylenglycol, Dipropylenglycol und Butyldiglycol.

14. Textilhilfsmittel nach einem der Ansprüche 5 bis 13, **dadurch gekennzeichnet, dass** es 2 bis 80 Gew.-% mindestens eines Polysiloxans nach einem der Ansprüche 1 bis 4,0 bis 40 Gew.-% mindestens eines Emulgators, insbesondere nach einem der Ansprüche 8 und/oder 9, 0 bis 5 Gew.-% mindestens einer anorganischen und/oder organischen Säure und/oder eines Säureanhydrids, insbesondere nach Anspruch 10, 0 bis 40 Gew.-% mindestens eines üblichen Ausrüstungsmittels, 0 bis 20 Gew.-% mindestens eines Hydrotopikums, insbesondere nach Anspruch 13 sowie 0 bis 98 Gew.-% Wasser enthält.

15. Faser oder Gewebe, **dadurch gekennzeichnet, dass** es mindestens ein Polysiloxan nach einem der Ansprüche 1 bis 4 aufweist oder mit einem Textilhilfsmittel nach einem der Ansprüche 5 bis 14 behandelt ist.

## Claims

1. A polysiloxane of the general formula (I) 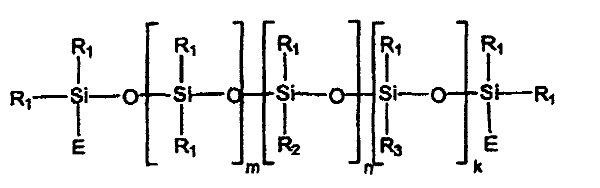 where m is an integer from 5-200,
n is an integer from 0-25,
k is an integer from 1-25,
R₁ is an aliphatic C₁ to C₃₀ radical or a phenyl radical,
R₂ is an aliphatic C₉ to C₃₀ radical and/or a polyether radical of the general formula (CH₂)₃O(C₂H₄O)ₓ(C₃H₆O)_{y}Q, where x and y may be the same or different and are each an integer between 0 and 50 and Q is hydrogen or an alkyl radical of 1 to 4 carbon atoms,
R₃ is an epoxidic radical or an MZ radical,
E is an MZ radical, R₃ or R₂,
each molecule containing at least one epoxidic radical and one MZ radical,
the epoxidic radical being selected from the group comprising 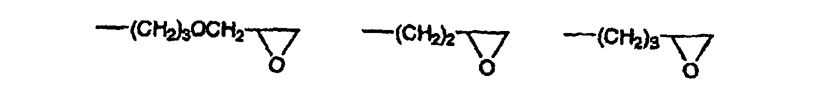 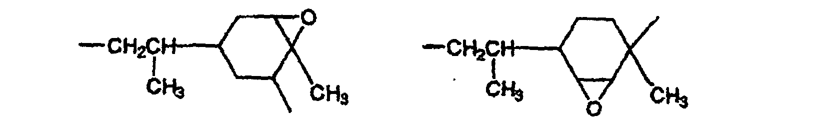 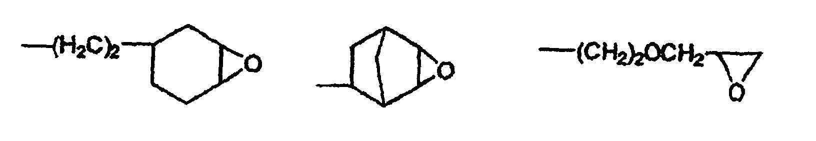 M being selected from the group comprising 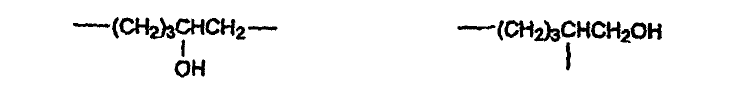 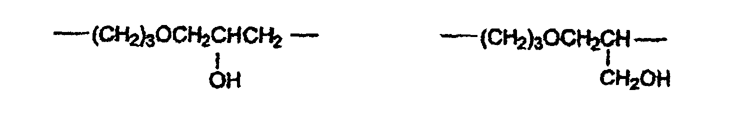 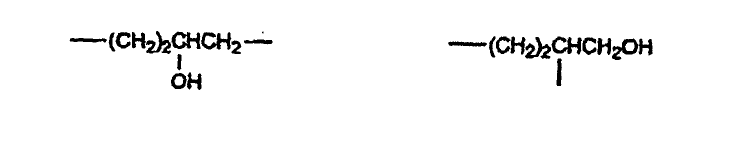 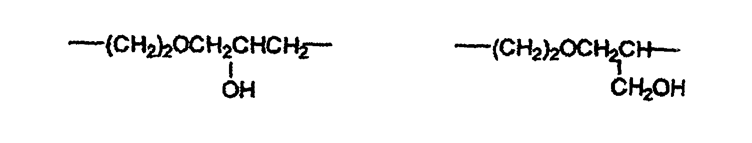 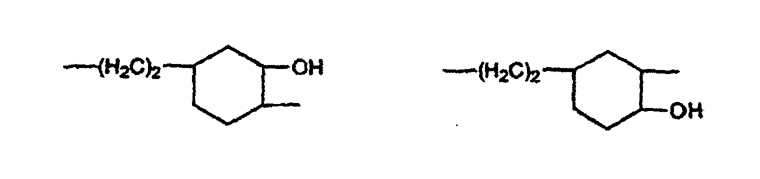 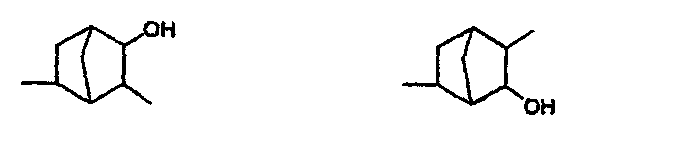 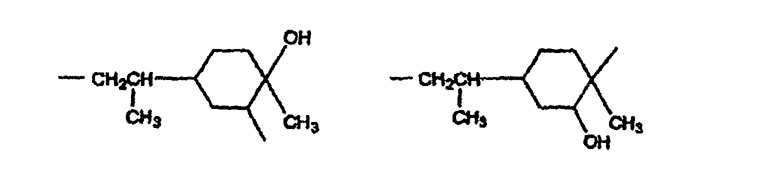 Z being selected from the group comprising 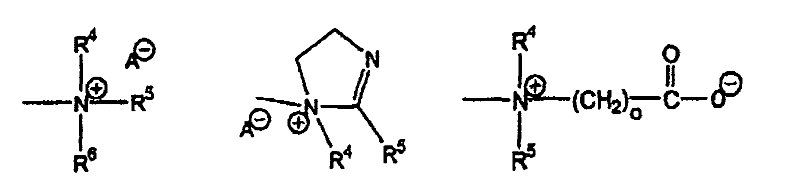 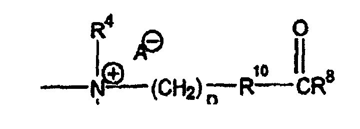 where the quaternary nitrogen atom of the Z radical is attached to the M radical via the carbon atom adjacent to the C-OH group in the M radical,
R⁴, R⁵ and R⁶ may be the same or different and may denote H, C₁ to C₂₂ alkyl, C₁ to C₂₂ alkenyl, which alkyl or alkylene radicals may contain hydroxyl groups,
R⁸ and R⁹ may be the same or different and each has the same meaning as R⁴ , R⁵ and R⁶ or are fluorine-, chlorine- or bromine-substituted C₁ to C₁₀ alkyl radicals,
R¹⁰ is an -O- or an NR¹¹ radical where R¹¹ = H, C₁ to C₄ alkyl or C₁ to C₄ hydroxyalkyl,
o is an integer from 1 to 4, and
A^{√} is an organic or inorganic anion derived from a customary physiologically tolerable acid HX.

2. A polysiloxane according to claim 1, **characterized in that** the fraction of C₂ to C₃₀ alkyl radicals is more than 10 mol% of the total number of radicals.

3. A polysiloxane according to either of the preceding claims, **characterized in that** R₂ is an aliphatic C₁₀ to C₂₀ radical.

4. A polysiloxane according to any one of the preceding claims, **characterized in that** the polyether radical denotes the general formula (CH₂)₃O(C₂H₄O)ₓ(C₃H₆O)_{y}Q, where x and y may be the same or different and x is an integer between 8 and 15, y is an integer between 0 and 25 and Q is hydrogen or an alkyl radical of 1 to 4 carbon atoms.

5. A textile auxiliary **characterized in that** it contains at least one polysiloxane according to any one of claims 1 to 4.

6. A textile auxiliary according to claim 5, **characterized in that** it is in the form of an aqueous emulsion.

7. A textile auxiliary according to claim 6, **characterized in that** it contains at least one nonionic and/or cationic emulsifier.

8. A textile auxiliary according to claim 7, **characterized in that** the nonionic emulsifier is selected from the group consisting of alkyl polyglycol ethers, preferably those having 4 to 40 ethylene oxide units and/or alkyl radicals of 8 to 20 carbon atoms; alkylaryl polyglycol ethers, preferably those having 4 to 40 ethylene oxide units and/or 8 to 20 carbon atoms in the alkyl radicals; ethylene oxide-propylene oxide block copolymers, preferably those having 4 to 40 ethylene oxide and/or propylene oxide units; saturated and unsaturated fatty acids having 6 to 24 carbon atoms; natural materials and their derivatives such as lecithin, lanolin, saponins, cellulose; cellulose alkyl ethers and carboxyalkylcelluloses whose alkyl groups each possess up to 4 carbon atoms; linear polydiorganosiloxanes containing polar groups, especially polyether groups; saturated and unsaturated alkoxylated fatty amines having 8 to 24 carbon atoms.

9. A textile auxiliary according to claim 7, **characterized in that** the cationic emulsifier is selected from the group consisting of salts of primary, secondary and tertiary fatty amines having 8 to 24 carbon atoms, especially with acetic acid, hydrochloric acid and phosphoric acids; quaternary alkylbenzeneammonium salts, especially those whose alkyl group possesses 6 to 24 carbon atoms, especially the halides, sulphates, phosphates and acetates; alkylpyridinium, alkylimidazolium and alkoxyoxazolinium salts, especially those whose alkyl chain possesses up to 18 carbon atoms, specifically the halides, sulphates, phosphates and acetates.

10. A textile auxiliary according to any one of claims 5 to 9, **characterized in that** it contains one or more inorganic and/or organic acids and/or anhydrides.

11. A textile auxiliary according to claim 10, **characterized in that** the acids and anhydrides are selected from the group consisting of hydrochloric acid, sulphuric acid and phosphoric acid, formic acid, acetic acid, glycolic acid, aldonic acids such as for example gluconic acid, ascorbic acid, uronic acids such as for example glucuronic acid, oxalic acid, citric acid, aldaric acids such as glucaric or mucic acid and also acetic anhydride, respectively.

12. A textile auxiliary according to any one of claims 5 to 11, **characterized in that** it contains at least one hydrotrope.

13. A textile auxiliary according to claim 12, **characterized in that** the hydrotrope is selected from the group of the polyfunctional alcohols, especially dialcohols having 2 to 10, preferably 2 to 6 and more preferably 2 to 4 carbon atoms per molecule, their mono- and diethers and also their mono- and diesters, preferably 1,2-propylene glycol, dipropylene glycol and butyldiglycol.

14. A textile auxiliary according to any one of claims 5 to 13, **characterized in that** it contains 2% to 80% by weight of at least one polysiloxane according to any one of claims 1 to 4, 0% to 40% by weight of at least one emulsifier, especially according to one of claims 8 and/or 9, 0% to 5% by weight of at least one inorganic and/or organic acid and/or of an acid anhydride, especially according to claim 10, 0% to 40% by weight of at least one customary finishing agent, 0% to 20% by weight of at least one hydrotrope, especially according to claim 13 and also 0% to 98% by weight of water.

15. Fibre or fabric **characterized in that** it comprises at least one polysiloxane according to any one of claims 1 to 4 or has been treated with a textile auxiliary according to any one of claims 5 to 14.

## Revendications

1. Polysiloxane de formule générale (I) 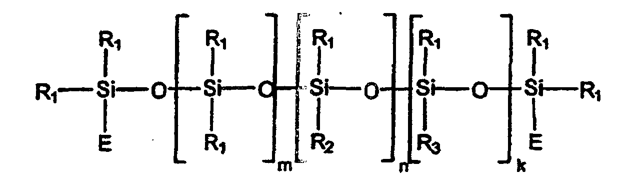 dans laquelle
m est un nombre entier allant de 5 à 200,
n est un nombre entier allant de 0 à 25,
k est un nombre entier allant de 1 à 25,
R₁ représente un radical aliphatique en C₁-C₃ ou un radical phényle,
R₂ représente un radical aliphatique en C₉-C₃₀ et/ou un radical polyéther de formule générale (CH₂)₃O(C₂H₄O)ₓ(C₃H₆O)_{y}Q, x et y pouvant être identiques ou différents et représentant un nombre entier entre 0 et 50 et Q représentant un atome d'hydrogène ou un radical alkyle ayant de 1 à 4 atomes de carbone,
R₃ représente un reste d'époxyde ou un radical MZ,
E représente un radical MZ, R₃ ou R₂,
au moins un reste d'époxyde ou un radical MZ étant contenu par molécule,
le reste d'époxyde étant choisi dans l'ensemble comprenant 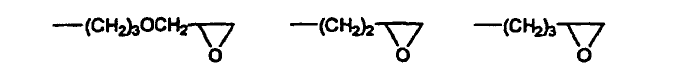 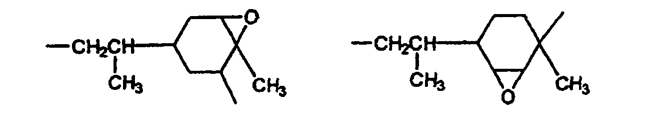 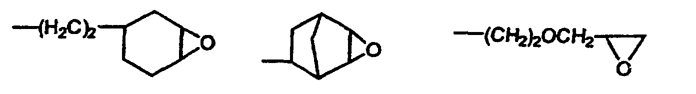 M étant choisi dans l'ensemble comprenant 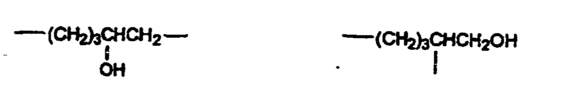 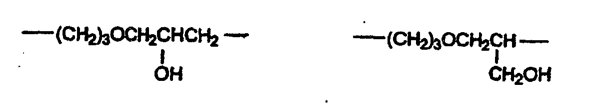 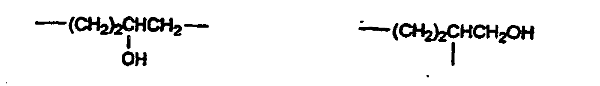 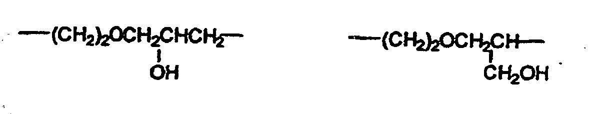 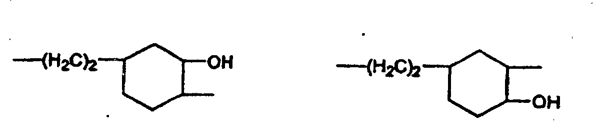 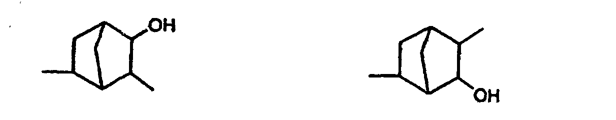 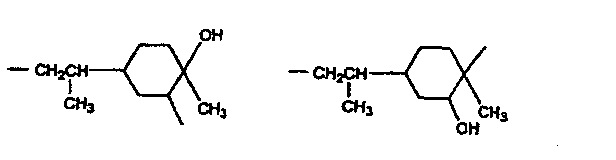 Z étant choisi dans l'ensemble comprenant 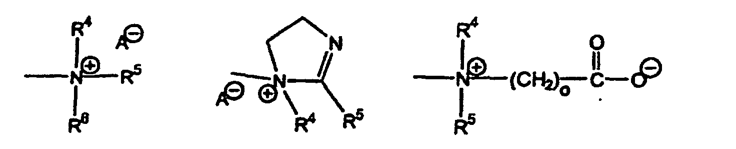 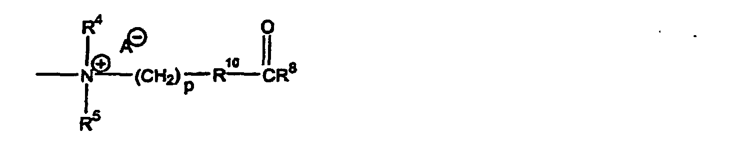 l'atome d'azote quaternaire du radical Z étant relié au radical M par l'atome de carbone voisin du groupe C-OH dans le radical M,
R⁴, R⁵, R⁶ pouvant être identiques ou différents et pouvant représenter H, un radical alkyle en C₁-C₂₂, un radical alcényle en C₁-C₂₂, les radicaux alkyle ou alcényle pouvant comporter des groupes hydroxy ;
R⁸, R⁹ pouvant être identiques ou différents et ayant la même signification que R⁴, R⁵, R⁶ ou étant des radicaux alkyle en C₁-C₁₀ substitués par le fluor, le chlore ou le brome,
R¹⁰ représentant un -O- ou un radical NR¹¹ où R¹¹= H, un groupe alkyle en C₁-C₄ ou hydroxyalkyle en C₁-C₄,
o étant un nombre entier allant de 1 à 4,
A□ étant un anion organique ou minéral qui provient d'un acide HX usuel, physiologiquement acceptable.

2. Polysiloxane selon la revendication 1, **caractérisé en ce que** la proportion des radicaux alkyle en C₂-C₃₀ par rapport au nombre total des radicaux est supérieure à 10 % en moles.

3. Polysiloxane selon l'une quelconque des revendications précédentes, **caractérisé en ce que** R₂ représente un radical aliphatique en C₁₀-C₂₀.

4. Polysiloxane selon l'une quelconque des revendications précédentes, **caractérisé en ce que** le radical polyéther correspond à la formule générale (CH₂)₃O(C₂H₄O)ₓ(C₃H₆O)_{y}Q, dans laquelle x et y peuvent être identiques ou différents et x représente un nombre entier entre 8 et 15 et y représente un nombre entier entre 0 et 25, et Q représente un atome d'hydrogène ou un radical alkyle ayant de 1 à 4 atomes de carbone.

5. Adjuvant pour textile, **caractérisé en ce qu'**il contient au moins un polysiloxane selon l'une quelconque des revendications 1 à 4.

6. Adjuvant pour textile selon la revendication 5, **caractérisé en ce qu'**il se trouve sous forme d'une émulsion aqueuse.

7. Adjuvant pour textile selon la revendication 6, **caractérisé en ce qu'**il contient au moins un émulsifiant cationique et/ou non ionique.

8. Adjuvant pour textile selon la revendication 7, **caractérisé en ce que** l'émulsifiant non ionique est choisi dans le groupe consistant en des alkylpolyglycoléthers, de préférence ceux comportant 4 à 4,0 motifs oxyde d'éthylène et/ou des radicaux alkyle ayant de 8 à 20 atomes de carbone ; des alkylarylpolyglycoléthers de préférence ceux comportant 4 à 40 motifs oxyde d'éthylène et/ou 8 à 20 atomes de carbone dans les radicaux alkyle ; des copolymères séquencés oxyde d'éthylène/oxyde de propylène, de préférence ceux comportant 4 à 40 motifs oxyde d'éthylène et/ou oxyde de propylène ; des acides gras saturés ou insaturés ayant de 6 à 24 atomes de carbone ; des substances naturelles et leurs dérivés, telles que la lécithine, la lanoline, la saponine, la cellulose ; des éthers alkyliques de cellulose et des carboxyalkylcellulose, dont les groupes alkyle ont chacun jusqu'à 4 atomes de carbone ; des polydiorganosiloxanes linéaires contenant des groupes polaires, en particulier des groupes polyéther ; des amines grasses alcoxylées saturées ou insaturées ayant de 8 à 24 atomes de carbone.

9. Adjuvant pour textile selon la revendication 7, **caractérisé en ce que** l'émulsifiant cationique est choisi dans le groupe consistant en des sels d'amines grasses primaires, secondaires et tertiaires ayant de 8 à 24 atomes de carbone, en particulier avec l'acide acétique, l'acide chlorhydrique et l'acide phosphorique ; des sels d'alkylbenzène-ammonium, notamment ceux dont le groupe alkyle a de 6 à 24 atomes de carbone, en particulier les halogénures, sulfates, phosphates et acétates ; des sels d'alkylpyridinium, alkylimidazolium et alkyloxazolinium, en particulier ceux dont la chaîne alkyle a jusqu'à 18 atomes de carbone, notamment les halogénures, sulfates, phosphates et acétates.

10. Adjuvant pour textile selon l'une quelconque des revendications 5 à 9, **caractérisé en ce qu'**il contient un ou plusieurs acides et/ou anhydrides minéraux et/ou organiques.

11. Adjuvant pour textile selon la revendication 10, **caractérisé en ce que** les acides ou anhydrides sont choisis dans le groupe consistant en l'acide chlorhydrique, l'acide sulfurique et l'acide phosphorique, l'acide formique, l'acide acétique, l'acide glycolique, les acides aldoniques, comme par exemple l'acide gluconique, l'acide ascorbique, les acides uroniques, comme par exemple l'acide glucuronique, l'acide oxalique, l'acide citrique, les acides aldariques, comme par exemple l'acide glucarique ou mucique, ainsi que l'anhydride acétique.

12. Adjuvant pour textile selon l'une quelconque des revendications 5 à 11, **caractérisé en ce qu'**il contient au moins un agent hydrotrope.

13. Adjuvant pour textile selon la revendication 12, **caractérisé en ce que** l'agent hydrotrope est choisi dans le groupe des alcools polyfonctionnels, en particulier des diols ayant de 2 à 10, de préférence de 2 à 6, de façon particulièrement préférée de 2 à 4 atomes de carbone par molécule, leurs mono- et diéthers ainsi que leurs mono- et diesters, de préférence le 1,2-propylèneglycol, le dipropylèneglycol et le butyldiglycol.

14. Adjuvant pour textile selon l'une quelconque des revendications 5 à 13, **caractérisé en ce qu'**il contient de 2 à 80 % en poids d'au moins un polysiloxane selon l'une quelconque des revendications 1 à 4, de 0 à 40 % en poids d'au moins un émulsifiant, en particulier selon l'une quelconque des revendications 8 et/ou 9, de 0 à 5 % en poids d'au moins un acide minéral et/ou organique et/ou d'un anhydride d'acide, en particulier selon la revendication 10, de 0 à 40 % en poids d'au moins un agent d'apprêtage usuel, de 0 à 20 % en poids d'au moins un agent hydrotrope, en particulier selon la revendication 13, ainsi que 0 à 98 % en poids d'eau.

15. Fibre ou tissu, **caractérisé(e) en ce qu'**elle (il) comporte au moins un polysiloxane selon l'une quelconque des revendications 1 à 4 ou est traité(e) par un adjuvant pour textile selon l'une quelconque des revendications 5 à 14.
